# EUROPEAN PATENT SPECIFICATION

(11) **EP 3 361 678 B1**
(45) Date of publication and mention of the grant of the patent: **02.06.2021**
(21) Application number: 17155852.1
(22) Date of filing: 13.02.2017
(51) Int. Cl.: H04L 12/58

(54) **MANAGEMENT OF PERMANENT PRESENCE STATES**
VERWALTUNG VON PERMANENTEN PRÄSENSZUSTÄNDEN
GESTION DES ÉTATS DE PRÉSENCE PERMANENTE

(43) Date of publication of application: 15.08.2018
(73) Proprietor: Nokia Solutions and Networks Oy, 02610 Espoo (FI)
(72) Inventor: DARLOY, Cedric, 91620 NOZAY (FR); COLAVITI, Eric, 91620 NOZAY (FR); MAOUCHE, Ahmed, 91620 NOZAY (FR)
(74) Representative: Laine IP Oy

(56) References cited:
- WO-A1-2008/120901
- WO-A1-2009/097902
- WO-A1-2010/090563
- US-A1- 2008 208 953

## Description

### FIELD OF THE INVENTION

The present invention pertains generally to the field of presence information handled in communication networks.

### BACKGROUND

In current communication networks based on Presence SIMPLE (SIP for Instant Messaging and Presence Leveraging Extensions), e.g. as specified in the Open Mobile Alliance Presence SIMPLE Specification, a watcher subscribing to presence information of a presentity sends a subscription message to a presence server and the presence server responds according to the authorization rules of the presentity.

The Open Mobile Alliance defines in "Presence SIMPLE Specification" the usage of Permanent Presence State that consists in a XML Configuration Access Protocol (XCAP) document used as a permanent presence publication for a subscriber, even when he is offline.

The limitations of this feature are:
- Unicity of the permanent state document (it is not possible to have several documents at the same time),
- It is not possible to schedule when this permanent state document is available for publication (subscriber must delete this document to make it unavailable

WO2009097902 discloses a method of authorising provision of in-directed content to a user of an IP communications network. The in-directed content is associated with a presentity subscriber of a presence service, the presence service including authorisation rules regarding users to which the in-directed content may be provided. The in-directed content is stored at a content server that is not controlled by the presence service. The method includes receiving at an authorisation proxy in the network a request from the user to be provided with the in-directed content, and identifying the presentity subscriber associated with the requested in-directed content. The authorisation proxy retrieves the authorisation rules to verify that the user is authorised to receive the in-directed content. Subject to the verification, the in-directed content is provided from the content server the user.

WO2008120901 discloses a system and method for directly requesting and receiving presence information from a presence source. The system for providing a presence service, which includes a presence source which stores presence information about at least one presentity, previously registers presence information elements, which the present source can publish, in a SIP/IP(Session Initiation Protocol/Internet Protocol) core in accordance with corresponding each media feature tag value, and publishes presence information according to media feature tag values when specific presence information is requested; a SIP/IP core which allows presence information elements registered by the presence source to each media feature tag value so as to store the presence information elements, allows the media feature tag value described in the message to correspond to a previously registered media feature tab value of the presence source so as to identify a presence source to which the message for requesting the presence information will be published when the SIP/IP core receives the presence information from the presence server, and transmits the message for requesting the presence information to corresponding presence source; and a presence server, which allows a media feature tag value regarding the corresponding presence information to be included in the message for requesting presence information so as to request specific presence information from the presence source, and then transmits the message for requesting presence information, which selectively includes a publication rule regarding corresponding presence information of the corresponding source.

WO2010090563 discloses a method in a presence server of providing presence information associated with a Presentity to a Watcher, having a Watcher Client, comprising an XDM Client. The Presence Server receives a request from the XDM client and identifies the Watcheron the basis of content of the request. On the basis of the request and the identity of the Watcher, the Presence Server generates a document from presence information that has previously been defined as an XCAP application usage and stored at the presence server. The document is then forwarded to the Watcher.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for the management of permanent presence states, the method comprising the steps in a content server according to independent claim 1.

Advantageously, the system extends capability of subscribers (presence sources) to manage their permanent presence state with a set of documents instead of only one and the possibility to schedule their availability for publication (for example instead of always publishing "I'm on holidays" during two weeks, it can schedule "I'm on holidays in Paris" the first week and "I'm on holidays in New York" the second week).

Also the operator can then manage in advance and efficiently publications for subscribers (eg disable video or audio capability publication for some subscribers during maintenance window to reduce traffic, setting some permanent state document on his behalf).

The invention also pertains to method for the management of permanent presence states, the method comprising the steps in a presence server according to independent claim 2.

The invention also pertains a method for the management of permanent presence states, the method comprising the steps in a system according to independent claim 3.

In an embodiment, the permanent state documents have different periods of validity.

In an embodiment, the different periods of validity of permanent state documents overlap.

In an embodiment, if at time of the presence composition different permanent state documents are retrieved, the merged presence document contains information from the different retrieved permanent state document.

In an embodiment, the merged presence document contains information from said at least one permanent state document in addition to other current presence documents (that contain standard presence information).

The invention also pertains to a content server for the management of permanent presence states according to independent claim 8.

The invention also pertains to a presence server for the management of permanent presence states according to independent claim 9.

The invention also pertains to a system for the management of permanent presence states according to independent claim 10.

The invention also pertains to a computer program capable of being implemented within a server, said program comprising instructions which, when the program is executed within said server, carry out all the steps according to claim 1.

The present invention and the benefits thereof shall be better understood upon examining the description below, which makes reference to the attached figures, in which:
- FIG. 1 is a schematic block diagram of a communication system according to one embodiment of the invention for management of permanent presence states; and
- FIG. 2 is an algorithm of a method for the management of permanent presence states according to one embodiment of the invention.

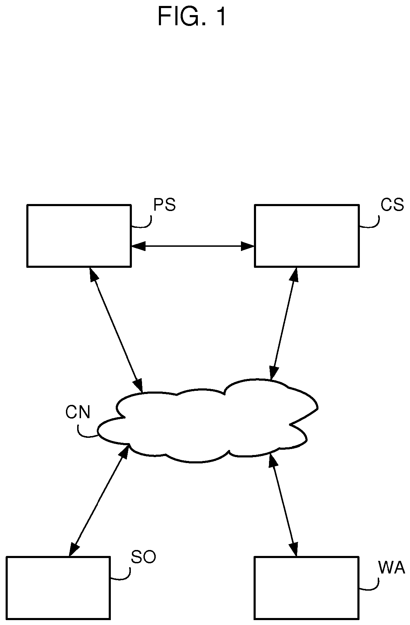

Referring to FIG. 1, a communication system implements presence functionality and comprises a presence server PS and a content server CS. The presence server PS communicates with entities comprising watchers WA and presence sources SO via a communication network CN, e.g. adapted for SIP.

The presence server PS is an entity that accepts, stores and distributes presence information. Especially, the presence server PS supports the following:
- Authorizes publications from Presence Sources representing the Presentity or another Presentity;
- Accepts and stores Presence Information published by Presence Sources according to [RFC3903];
Composes Presence Information from Presence Sources and Permanent Presence Information from the Presence XDMS;
Authorizes Watchers' subscriptions and distributes Presence Information according to [RFC3265] and [RFC3856];
Authorizes Watcher Information Subscribers' subscriptions and distributes Watcher Information according to [RFC3265], [RFC3857], and other extensions;
Triggers the conveyance of Presence Information from Presence Sources;
Regulates the distribution of Presence Information and Watcher Information in the manner as requested by Watchers and Watcher Information Subscribers;
Stores or retrieves MIME objects to/from the Content Server;
Subscribes to changes to documents stored in the Shared List XDMS and Presence XDMS.

The content server CS is a XML Document Management Server (XDMS) that is a functional element of IP communications networks. The content server CS manages user XML documents (e.g. Presence Subscription Rules, Permanent Presence State) which are specific to the use of a presence server, enables subscriptions to and notifies subscribers (watchers) of changes to documents stored in the content server.

The transfer of presence-specific XML documents (e.g. Presence Subscription Rules, Permanent Presence State) between the content server (Presence XDMS) and the presence server PS is based on the XCAP protocol.

Presence sources SO may update presence documents, presence rules and authorizations in the content server CS, e.g. by sending XCAP requests, via the communication network CN.

Presence sources SO or operators use a specific XCAP configuration document CD manageable with a dedicated application usage ID (AUID), content type, name and structure. This configuration document is a set of pointers to permanent state documents PSD previously set by user or operator, but defining also the validity and period during which the permanent state documents are published (e.g. valid until specific date, or every days from 8am to 11am ...).

For backward compatibility, the presence server PS continues to follow usage of permanent state document as defined in OMA "Presence SIMPLE Specification", but also fetches the XCAP configuration document CD and depending on validity of pointed permanent state documents, fetches them and merge them following the same process as described for Permanent State Document in OMA "Presence XDM Specification" specifications.

The presence server PS ensures it has the latest available permanent presence state documents as well as configuration document CD when applying the presence composition (merge of different available presence documents - permanent or non permanent documents). To that end, it subscribes to these documents from the content server CS and apply changes on documents updates.

Additionally, the presence server PS sets timers to remove documents for presence composition when they expire depending on their configuration.

The configuration document CD created by user via presence source is stored in the content server CS and accessible from the presence server by request. The configuration document contains a set of pointers to permanent state documents PSD under the form of URLs (Uniform Resource Locator) associated with these permanent state documents PSD.

For each permanent state document PSD created by the user, the configuration document CD defines a triplet containing the name of the permanent state document, the URL of the permanent state document, and the period of validity of the permanent state document.

The permanent state documents PSD have different periods of validity that can overlap.

For example, a configuration document CD has the following content:

```
 <permanent-docs>
   <permanent-doc validity="xxx" periodicity="xxx" repeat="xxx">
      <document-url>
        http://xcap.example.com/services/pidf-
 manipulation/users/sip:ronald.underwood@example.com/doc1
      </document-url>
   </permanent-doc>
   <permanent-doc validity="xxx" periodicity="xxx" repeat="xxx">
      <document-url>
        http://xcap.example.com/services/pidf-
 manipulation/users/sip:ronald.underwood@example.com/doc2
      </document-url>
   </permanent-doc>
 </permanent-docs>
```

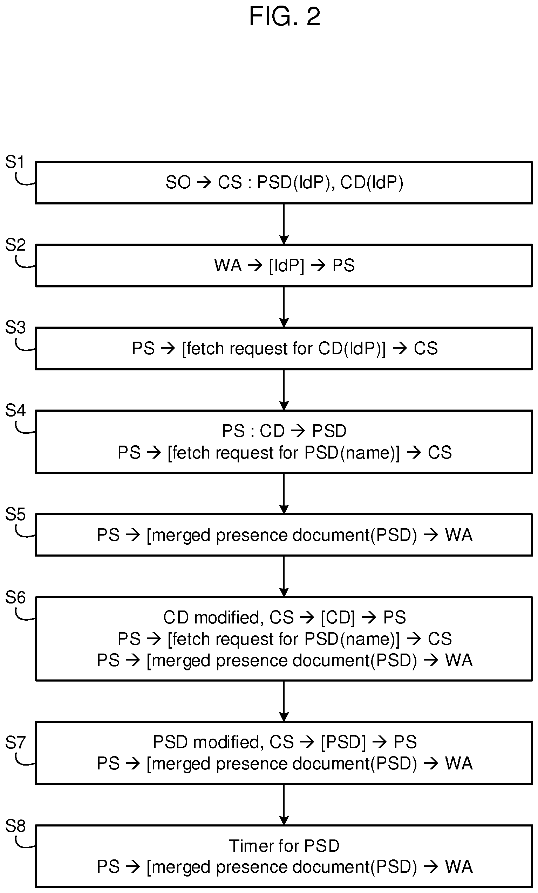

With reference to FIG. 2, a method for the management of permanent presence states according to one embodiment of the invention comprises steps S1 to S8.

At step S1, a presence source SO manipulated by a user called "presentity" is connected to the content server CS. The user creates different permanent state document PSD and a configuration document CD that are stored in the content server CS. Each one of the permanent state documents has a different name, a different URL, and a different period of validity that are defined in the configuration document CD. The configuration document CD is stored in correspondence with an identifier IdP of the presentity.

At step S2, a watcher WA subscribes to the presence of the presentity to the presence server PS, by sending a subscription request to the presence server PS, the request containing the identifier IdP of the presentity.

At step S3, when receiving the subscription request, the presence server PS requests the configuration document CD of the presentity by sending a fetch request to the content server CS, the fetch request containing the identifier IdP of the presentity, in order to retrieve the configuration document CD, the content server identifying the configuration document CD by means of the identifier IdP and sending the requested configuration document.

At step S4, the presence server PS extracts all pointed presence permanent documents in the configuration document CD, by means of the names and URLs associated with the permanent state documents.

For each identified permanent state document, depending on its period of validity indicated in the configuration document, the presence server PS applies the "Permanent Presence State" section of OMA "Presence SIMPLE Specification". In other words, the presence server PS sends a fetch request for at least one permanent state document PSD which is available for publication according to its period of validity, the request containing the name of the permanent state document and receives the permanent state document PSD, the content server having identified the permanent state document by means of its name.

Additionally, the presence server subscribes to the permanent state document PSD from the content server CS for updates. When a permanent state document PSD is not available according to its configuration, the presence server, in its sole discretion, can either chose to fetch it and store it anyway or to set a timer to fetch it when available.

Additionally, the presence server PS makes a subscription to the configuration document CD from the content server CS for updates.

At step S5, the presence server PS applies presence composition of the subscribed presentity as described in OMA "Presence SIMPLE Specification". In other words, the presence server PS uses retrieved permanent state documents according to their availability configuration, instantiates corresponding timers mechanism for documents availability, and goes on with presence subscription mechanism by notifying the watcher WA with a notify request containing the presentity's merged presence document, the merged presence document being created by the presence composition taking into account the different current presence documents published for the presentity for its active devices and the different permanent state documents PSD available at the time of the presence composition.

At step S6, when the presentity modifies the configuration document CD, the presence server PS is notified and fetches the modified configuration document on the content server CS.

Again, the presence server PS extracts all pointed permanent state documents in the modified configuration document, and makes a fetch request to the content server for each permanent state document. It also updates its subscriptions to these permanent state documents, according to their availability configuration (new subscriptions for new documents or subscription end for removed documents). When a permanent state documents is not available according to its availability configuration, the presence server, in its sole discretion, can either chose to fetch it and store it anyway or to set a timer to fetch it when available.

The presence server PS then applies presence composition of the subscribed presentity as described in OMA "Presence SIMPLE Specification" using the modified configuration document, updates timers mechanism if needed, and notifies the watcher with the permanent state document PSD available for publication.

At step S7, when the presentity modifies a permanent state document PSD, the presence server PS is notified and fetches the modified permanent state document PSD on the content server CS.

When the permanent state document is currently not available according to its configuration, the presence server, in its sole discretion, can either chose to fetch it and store it anyway or to set a timer to fetch it when available.

When the permanent state document is currently available, the presence server then applies subscribed presentity's presence composition as described in OMA "Presence SIMPLE Specification" using the modified permanent state document and notifies the watcher.

At step S8, when a timer event is fired for a permanent state document PSD, the presence server PS checks the availability of the permanent state document. It the permanent state document is now available, the presence server PS, in its sole discretion, can either retrieve it from its cache or make a fetch request to the content server to retrieve it.

The presence server PS then applies the subscribed presentity's presence composition as described in OMA "Presence SIMPLE Specification" using the permanent state document and notifies the watcher.

At step S8, when no more subscription to the presentity exists, the presence server can remove permanent state documents from the presentity's presence document composition, and deactivate its subscription to the configuration document CD from the content server.

For each permanent state documents pointed in the configuration document, the presence server PS deactivates its corresponding subscription from the content server CS and cancel timers if any.

The invention described here relates to a method and an apparatus for the management of permanent presence states. According to one implementation of the invention, the steps of the invention are determined by the instructions of a computer program incorporated into the server. The program comprises program instructions which, when said program is loaded and executed within the server, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for the management of permanent presence states, the method comprising the following steps in a content server (CS):
storing (S1) different permanent state documents (PSD) and a configuration document (CD), the permanent state documents having different names, the configuration document defining for each permanent state documents the name of the permanent state document, an URL of the permanent state document, and a period of validity of the permanent state document, and the configuration document being stored in correspondence with an identifier (IdP) of a presentity,
receiving (S3) a fetch request for the configuration document (CD) from a presence server (PS), the fetch request containing an identifier (IdP) of the presentity, and sending the configuration document (CD) identified by means of the identifier (IdP) to the presence server (PS),
receiving (S4), from the presence server (PS), a fetch request for at least one permanent state document (PSD) which is available for publication according to its period of validity, the request containing the name of the permanent state document, and sending said at least one permanent state document (PSD) identified by means of its name to the presence server (PS),
wherein the exchanges between the content server (CS) and the presence server (PS) are based on the XML Configuration Access Protocol.

2. A method for the management of permanent presence states, the method comprising the following steps in a presence server (PS):
receiving (S2) a subscription request from a watcher (WA), the request containing the identifier (IdP) of a presentity,
sending (S3) a fetch request for a configuration document (CD) of the presentity to a content server (CS), the fetch request containing the identifier (IdP) of the presentity, and retrieving the configuration document (CD), the configuration document defining for each of different permanent state documents (PSD) the name of the permanent state document, an URL of the permanent state document, and a period of validity of the permanent state document,
extracting (S4) all pointed presence permanent documents in the configuration document (CD), by means of the names and URLs associated with the permanent state documents,
sending a fetch request for at least one permanent state document (PSD) which is available for publication according to its period of validity to the content server (CS), and retrieving said at least one permanent permanent state document (PSD),
applying (S5) a presence composition of the subscribed presentity and sending a merged presence document containing information from said at least one permanent state document (PSD) to the watcher (WA),
wherein the exchanges between the content server (CS) and the presence server (PS) are based on the XML Configuration Access Protocol.

3. A method for the management of permanent presence states, the method comprising the following steps in a system:
storing (S1), in a content server (CS), different permanent state documents (PSD) and a configuration document (CD), the permanent state documents having different names, the configuration document defining for each permanent state documents the name of the permanent state document, an URL of the permanent state document, and a period of validity of the permanent state document, and the configuration document being stored in correspondence with an identifier (IdP) of a presentity,
receiving (S2), in a presence server (PS), a subscription request from a watcher, the request containing the identifier (IdP) of a presentity,
sending (S3) a fetch request for the configuration document (CD) of the presentity from the presence server (PS) to the content server (CS), the fetch request containing the identifier (IdP) of the presentity, and retrieving in the presence server the configuration document (CD),
extracting (S4), in the presence server (PS), all pointed presence permanent documents in the configuration document (CD), by means of the names and URLs associated with the permanent state documents,
sending, in the presence server (PS), a fetch request for at least one permanent state document (PSD) which is available for publication according to its period of validity to the content server (CS), and retrieving the permanent state document (PSD),
applying (S5), in the presence server (PS), a presence composition of the subscribed presentity and sending a merged presence document containing information from the permanent state document (PSD) to the watcher
wherein the exchanges between the content server (CS) and the presence server (PS) are based on the XML Configuration Access Protocol.

4. A method according to claim 3, wherein the permanent state documents (PSD) have different periods of validity.

5. A method according to claim 3 or 4, wherein the different periods of validity of permanent state documents (PSD) overlap.

6. A method according to any of the claims 3 to 5, wherein if at time of the presence composition different permanent state documents (PSD) are retrieved, the merged presence document contains information from the different retrieved permanent state document (PSD).

7. A method according to any of the claims 3 to 6, wherein the merged presence document contains information from said at least one permanent state document (PSD) in addition to other current presence documents.

8. A content server (CS) for the management of permanent presence states, the content server (CS) being configured to:
store different permanent state documents (PSD) and a configuration document (CD), the permanent state documents having different names, the configuration document defining for each permanent state documents the name of the permanent state document, an URL of the permanent state document, and a period of validity of the permanent state document, and the configuration document being stored in correspondence with an identifier (IdP) of a presentity,
receive a fetch request for the configuration document (CD) from a presence server (PS), the fetch request containing an identifier (IdP) of the presentity, and send the configuration document (CD) identified by means of the identifier (IdP) to the presence server (PS),
receive, from the presence server, a fetch request for at least one permanent state document (PSD) which is available for publication according to its period of validity, the request containing the name of the permanent state document, and send said at least one permanent state document (PSD) identified by means of its name to the presence server
wherein the exchanges between the content server (CS) and the presence server (PS) are based on the XML Configuration Access Protocol.

9. A presence server (PS) for the management of permanent presence states, the presence server (PS) being configured to:
receive a subscription request from a watcher (WA), the request containing the identifier (IdP) of a presentity,
send a fetch request for a configuration document (CD) of the presentity to the content server (CS), the fetch request containing the identifier (IdP) of the presentity, and retrieve the configuration document (CD), the configuration document defining for each of different permanent state documents (PSD) the name of the permanent state document, an URL of the permanent state document, and a period of validity of the permanent state document,
extract all pointed presence permanent documents in the configuration document (CD), by means of the names and URLs associated with the permanent state documents,
send a fetch request for at least one permanent state document (PSD) which is available for publication according to its period of validity to the content server (CS), and retrieve said at least one permanent permanent state document (PSD),
apply a presence composition of the subscribed presentity and sending a merged presence document containing information from said at least one permanent state document (PSD) to the watcher (WA)
wherein the exchanges between the content server (CS) and the presence server (PS) are based on the XML Configuration Access Protocol.

10. A system (PS; CS) for the management of permanent presence states, the system being configured to:
store, in a content server (CS), different permanent state documents (PSD) and a configuration document (CD), the permanent state documents having different names, the configuration document defining for each permanent state documents the name of the permanent state document, an URL of the permanent state document, and a period of validity of the permanent state document, and the configuration document being stored in correspondence with an identifier (IdP) of a presentity,
receive, in a presence server (PS), a subscription request from a watcher, the request containing the identifier (IdP) of a presentity,
send a fetch request for the configuration document (CD) of the presentity from the presence server (PS) to the content server (CS), the fetch request containing the identifier (IdP) of the presentity, and retrieve in the presence server the configuration document (CD),
extract, in the presence server (PS), all pointed presence permanent documents in the configuration document (CD), by means of the names and URLs associated with the permanent state documents,
send, in the presence server (PS), a fetch request for at least one permanent state document (PSD) which is available for publication according to its period of validity to the content server (CS), and retrieve the permanent state document (PSD),
apply, in the presence server (PS), a presence composition of the subscribed presentity and send a merged presence document containing information from the permanent state document (PSD) to the watcher
wherein the exchanges between the content server (CS) and the presence server (PS) are based on the XML Configuration Access Protocol.

11. A non-transitory computer readable storage medium storing instructions that, when executed by a content server, cause the server to perform a method for management of permanent presence states according to all the steps of claim 1.

12. A non-transitory computer readable storage medium storing instructions that, when executed by a presence server, cause the server to perform a method for management of permanent presence states according to all the steps of claim 2.

13. A non-transitory computer readable storage medium storing instructions that, when executed by a system, cause the server to perform a method for management of permanent presence states according to all the steps of claim 3.

## Patentansprüche

1. Verfahren für die Verwaltung von permanenten Anwesenheitszuständen, wobei das Verfahren auf einem Inhaltsserver (CS) die folgenden Schritte umfasst:
Speichern (S1) von verschiedenen permanenten Zustandsdokumenten (PSD) und eines Auslegungsdokuments (CD), wobei die permanenten Zustandsdokumente verschiedene Namen haben, wobei das Auslegungsdokument für jedes permanente Zustandsdokument den Namen des permanenten Zustandsdokuments, eine URL des permanenten Zustandsdokuments und eine Gültigkeitsperiode des permanenten Zustandsdokuments definiert und wobei das Auslegungsdokument in Entsprechung mit einer Kennung (IdP) einer Anwesenheitsentität gespeichert wird,
Empfangen (S3) einer Abholanforderung für das Auslegungsdokument (CD) von einem Anwesenheitsserver (PS), wobei die Abholanforderung eine Kennung (IdP) der Anwesenheitsentität enthält, und Senden des Auslegungsdokuments (CD), das mittels der Kennung (IdP) identifiziert ist, an den Anwesenheitsserver (PS),
Empfangen (S4) einer Abholanforderung für mindestens ein permanentes Zustandsdokument (PSD), das gemäß seiner Gültigkeitsperiode zur Veröffentlichung verfügbar ist, vom Anwesenheitsserver (PS), wobei die Anforderung den Namen des permanenten Zustandsdokuments enthält, und Senden des mindestens einen permanenten Zustandsdokuments (PSD), das mittels seines Namens identifiziert ist, an den Anwesenheitsserver (PS),
wobei die Austausche zwischen dem Inhaltsserver (CS) und dem Anwesenheitsserver (PS) auf dem XML-Auslegungszugangsprotokoll basieren.

2. Verfahren für die Verwaltung von permanenten Anwesenheitszuständen, wobei das Verfahren auf einem Anwesenheitsserver (PS) die folgenden Schritte umfasst:
Empfangen (S2) einer Abonnementanforderung von einem Beobachter (WA), wobei die Anforderung die Kennung (IdP) einer Anwesenheitsentität enthält,
Senden (S3) einer Abholanforderung für ein Auslegungsdokument (CD) der Anwesenheitsentität an einen Inhaltsserver (CS), wobei die Abholanforderung die Kennung (IdP) der Anwesenheitsentität enthält, und Abrufen des Auslegungsdokuments (CD), wobei das Auslegungsdokument für jedes von verschiedenen permanenten Zustandsdokumenten (PSD) den Namen des permanenten Zustandsdokuments, eine URL des permanenten Zustandsdokuments und eine Gültigkeitsperiode des permanenten Zustandsdokuments definiert,
Extrahieren (S4) aller permanenten Anwesenheitsdokumente, auf die im Auslegungsdokument (CD) gezeigt wird, mittels der Namen und der URLs, die mit den permanenten Zustandsdokumenten verknüpft sind,
Senden einer Abholanforderung für mindestens ein permanentes Zustandsdokument (PSD), das gemäß seiner Gültigkeitsperiode für eine Veröffentlichung verfügbar ist, an den Inhaltsserver (CS) und Abrufen des mindestens einen permanenten Zustandsdokuments (PSD),
Anwenden (S5) einer Anwesenheitszusammensetzung der abonnierten Anwesenheitsentität und Senden eines zusammengeführten Anwesenheitsdokuments, das Informationen von dem mindestens einen permanenten Zustandsdokument (PSD) enthält, an den Beobachter (WA),
wobei die Austausche zwischen dem Inhaltsserver (CS) und dem Anwesenheitsserver (PS) auf dem XML-Auslegungszugangsprotokoll basieren.

3. Verfahren für die Verwaltung von permanenten Anwesenheitszuständen, wobei das Verfahren in einem System die folgenden Schritte umfasst:
Speichern (S1) von verschiedenen permanenten Zustandsdokumenten (PSD) und eines Auslegungsdokuments (CD) auf einem Inhaltsserver (CS), wobei die permanenten Zustandsdokumente verschiedene Namen haben, wobei das Auslegungsdokument für jedes permanente Zustandsdokument den Namen des permanenten Zustandsdokuments, eine URL des permanenten Zustandsdokuments und eine Gültigkeitsperiode des permanenten Zustandsdokuments definiert und wobei das Auslegungsdokument in Entsprechung mit einer Kennung (IdP) einer Anwesenheitsentität gespeichert wird,
Empfangen (S2) einer Abonnementanforderung auf einem Anwesenheitsserver (PS) von einem Beobachter, wobei die Anforderung die Kennung (IdP) einer Anwesenheitsentität enthält,
Senden (S3) einer Abholanforderung für das Auslegungsdokument (CD) der Anwesenheitsentität vom Anwesenheitsserver (PS) an den Inhaltsserver (CS), wobei die Abholanforderung die Kennung (IdP) der Anwesenheitsentität enthält, und Abrufen des Auslegungsdokuments (CD) auf dem Anwesenheitsserver,
Extrahieren (S4) aller permanenten Anwesenheitsdokumente, auf die im Auslegungsdokument (CD) gezeigt wird, mittels der Namen und der URLs, die mit den permanenten Zustandsdokumenten verknüpft sind, auf dem Anwesenheitsserver (PS),
Senden einer Abholanforderung für mindestens ein permanentes Zustandsdokument (PSD), das gemäß seiner Gültigkeitsperiode für eine Veröffentlichung verfügbar ist, auf dem Anwesenheitsserver (PS) an den Inhaltsserver (CS) und Abrufen des permanenten Zustandsdokuments (PSD),
Anwenden (S5) einer Anwesenheitszusammensetzung der abonnierten Anwesenheitsentität und Senden eines zusammengeführten Anwesenheitsdokuments, das Informationen von dem permanenten Zustandsdokument (PSD) enthält, auf dem Anwesenheitsserver (PS) an den Beobachter
wobei die Austausche zwischen dem Inhaltsserver (CS) und dem Anwesenheitsserver (PS) auf dem XML-Auslegungszugangsprotokoll basieren,

4. Verfahren nach Anspruch 3, wobei die permanenten Zustandsdokumente (PSD) verschiedene Gültigkeitsperioden haben.

5. Verfahren nach Anspruch 3 oder 4, wobei sich die verschiedenen Gültigkeitsperioden von permanenten Zustandsdokumenten (PSD) überlappen.

6. Verfahren nach einem der Ansprüche 3 bis 5, wobei, wenn zur Zeit der Anwesenheitszusammensetzung verschiedene permanente Zustandsdokumente (PSD) abgerufen werden, das zusammengeführte Anwesenheitsdokument Informationen vom verschiedenen abgerufenen permanenten Zustandsdokument (PSD) enthält.

7. Verfahren nach einem der Ansprüche 3 bis 6, wobei das zusammengeführte Anwesenheitsdokument zusätzlich zu anderen aktuellen Anwesenheitsdokumenten Informationen von dem mindestens einen permanenten Zustandsdokument (PSD) enthält.

8. Inhaltsserver (CS) für die Verwaltung von permanenten Anwesenheitszuständen, wobei der Inhaltsserver (CS) zu Folgendem ausgelegt ist:
Speichern von verschiedenen permanenten Zustandsdokumenten (PSD) und eines Auslegungsdokuments (CD), wobei die permanenten Zustandsdokumente verschiedene Namen haben, wobei das Auslegungsdokument für jedes permanente Zustandsdokument den Namen des permanenten Zustandsdokuments, eine URL des permanenten Zustandsdokuments und eine Gültigkeitsperiode des permanenten Zustandsdokuments definiert und wobei das Auslegungsdokument in Entsprechung mit einer Kennung (IdP) einer Anwesenheitsentität gespeichert wird,
Empfangen einer Abholanforderung für das Auslegungsdokument (CD) von einem Anwesenheitsserver (PS), wobei die Abholanforderung eine Kennung (IdP) der Anwesenheitsentität enthält, und Senden des Auslegungsdokuments (CD), das mittels der Kennung (IdP) identifiziert ist, an den Anwesenheitsserver (PS),
Empfangen einer Abholanforderung für mindestens ein permanentes Zustandsdokument (PSD), das gemäß seiner Gültigkeitsperiode zur Veröffentlichung verfügbar ist, vom Anwesenheitsserver, wobei die Anforderung den Namen des permanenten Zustandsdokuments enthält, und Senden des mindestens einen permanenten Zustandsdokuments (PSD), das mittels seines Namens identifiziert ist, an den Anwesenheitsserver
wobei die Austausche zwischen dem Inhaltsserver (CS) und dem Anwesenheitsserver (PS) auf dem XML-Auslegungszugangsprotokoll basieren.

9. Anwesenheitsserver (PS) für die Verwaltung von permanenten Anwesenheitszuständen, wobei der Anwesenheitsserver (PS) zu Folgendem ausgelegt ist:
Empfangen einer Abonnementanforderung von einem Beobachter (WA), wobei die Anforderung die Kennung (IdP) einer Anwesenheitsentität enthält,
Senden einer Abholanforderung für ein Auslegungsdokument (CD) der Anwesenheitsentität an den Inhaltsserver (CS), wobei die Abholanforderung die Kennung (IdP) der Anwesenheitsentität enthält, und Abrufen des Auslegungsdokuments (CD), wobei das Auslegungsdokument für jedes von verschiedenen permanenten Zustandsdokumenten (PSD) den Namen des permanenten Zustandsdokuments, eine URL des permanenten Zustandsdokuments und eine Gültigkeitsperiode des permanenten Zustandsdokuments definiert,
Extrahieren aller permanenten Anwesenheitsdokumente, auf die im Auslegungsdokument (CD) gezeigt wird, mittels der Namen und der URLs, die mit den permanenten Zustandsdokumenten verknüpft sind,
Senden einer Abholanforderung für mindestens ein permanentes Zustandsdokument (PSD), das gemäß seiner Gültigkeitsperiode für eine Veröffentlichung verfügbar ist, an den Inhaltsserver (CS) und Abrufen des mindestens einen permanenten permanenten Zustandsdokuments (PSD),
Anwenden einer Anwesenheitszusammensetzung der abonnierten Anwesenheitsentität und Senden eines zusammengeführten Anwesenheitsdokuments, das Informationen von dem mindestens einen permanenten Zustandsdokument (PSD) enthält, an den Beobachter (WA)
wobei die Austausche zwischen dem Inhaltsserver (CS) und dem Anwesenheitsserver (PS) auf dem XML-Auslegungszugangsprotokoll basieren,

10. System (PS; CS) für die Verwaltung von permanenten Anwesenheitszuständen, wobei das System zu Folgendem ausgelegt ist:
Speichern von verschiedenen permanenten Zustandsdokumenten (PSD) und eines Auslegungsdokuments (CD) auf einem Inhaltsserver (CS), wobei die permanenten Zustandsdokumente verschiedene Namen haben, wobei das Auslegungsdokument für jedes permanente Zustandsdokumente den Namen des permanenten Zustandsdokuments, eine URL des permanenten Zustandsdokuments und eine Gültigkeitsperiode des permanenten Zustandsdokuments definiert und wobei das Auslegungsdokument in Entsprechung mit einer Kennung (IdP) einer Anwesenheitsentität gespeichert wird,
Empfangen einer Abonnementanforderung auf einem Anwesenheitsserver (PS) von einem Beobachter, wobei die Anforderung die Kennung (IdP) einer Anwesenheitsentität enthält,
Senden einer Abholanforderung für das Auslegungsdokument (CD) der Anwesenheitsentität vom Anwesenheitsserver (PS) an den Inhaltsserver (CS), wobei die Abholanforderung die Kennung (IdP) der Anwesenheitsentität enthält, und Abrufen des Auslegungsdokuments (CD) auf dem Anwesenheitsserver,
Extrahieren aller permanenten Anwesenheitsdokumente, auf die im Auslegungsdokument (CD) gezeigt wird, mittels der Namen und der URLs, die mit den permanenten Zustandsdokumenten verknüpft sind, auf dem Anwesenheitsserver (PS),
Senden einer Abholanforderung für mindestens ein permanentes Zustandsdokument (PSD), das gemäß seiner Gültigkeitsperiode für eine Veröffentlichung verfügbar ist, auf dem Anwesenheitsserver (PS) an den Inhaltsserver (CS) und Abrufen des permanenten Zustandsdokuments (PSD),
Anwenden einer Anwesenheitszusammensetzung der abonnierten Anwesenheitsentität und Senden eines zusammengeführten Anwesenheitsdokuments, das Informationen von dem permanenten Zustandsdokument (PSD) enthält, auf dem Anwesenheitsserver (PS) an den Beobachter
wobei die Austausche zwischen dem Inhaltsserver (CS) und dem Anwesenheitsserver (PS) auf dem XML-Auslegungszugangsprotokoll basieren,

11. Nichttransitorisches computerlesbares Speichermedium, auf dem Anweisungen gespeichert sind, die, wenn sie von einem Inhaltsserver ausgeführt werden, bewirken, dass der Server ein Verfahren zur Verwaltung von permanenten Anwesenheitszuständen gemäß allen Schritten von Anspruch 1 durchführt.

12. Nichttransitorisches computerlesbares Speichermedium, auf dem Anweisungen gespeichert sind, die, wenn sie von einem Anwesenheitsserver ausgeführt werden, bewirken, dass der Server ein Verfahren zur Verwaltung von permanenten Anwesenheitszuständen gemäß allen Schritten von Anspruch 2 durchführt.

13. Nichttransitorisches computerlesbares Speichermedium, auf dem Anweisungen gespeichert sind, die, wenn sie von einem System ausgeführt werden, bewirken, dass der Server ein Verfahren zur Verwaltung von permanenten Anwesenheitszuständen gemäß allen Schritten von Anspruch 3 durchführt.

## Revendications

1. Procédé de gestion d'états de présence permanents, le procédé comprenant les étapes suivantes dans un serveur de contenu (CS) :
stocker (S1) différents documents d'états permanents (PSD) et un document de configuration (CD), les documents d'états permanents ayant des noms différents, le document de configuration définissant pour chaque document d'état permanent le nom du document d'état permanent, une URL du document d'état permanent, et une période de validité du document d'état permanent, et le document de configuration étant stocké en correspondance avec un identifiant (IdP) d'une entité présente,
recevoir (S3) une demande d'extraction pour le document de configuration (CD) en provenance d'un serveur de présence (PS), la demande d'extraction contenant un identifiant (IdP) de l'entité présente, et envoyer le document de configuration (CD) identifié au moyen de l'identifiant (IdP) au serveur de présence (PS),
recevoir (S4), à partir du serveur de présence (PS), une demande d'extraction pour au moins un document d'état permanent (PSD) qui est disponible pour la publication selon sa période de validité, la demande contenant le nom du document d'état permanent, et envoyer ledit au moins un document d'état permanent (PSD) identifié au moyen de son nom au serveur de présence (PS),
dans lequel les échanges entre le serveur de contenu (CS) et le serveur de présence (PS) sont basés sur le protocole d'accès à la configuration XML.

2. Procédé de gestion d'états de présence permanents, le procédé comprenant les étapes suivantes dans un serveur de présence (PS) :
recevoir (S2) une demande d'abonnement en provenance d'un observateur (WA), la demande contenant l'identifiant (IdP) d'une entité présente,
envoyer (S3) une demande d'extraction pour un document de configuration (CD) de l'entité présente à un serveur de contenu (CS), la demande d'extraction contenant l'identifiant (IdP) de l'entité présente, et récupérer le document de configuration (CD), le document de configuration définissant pour chacun des différents documents d'états permanents (PSD) le nom du document d'état permanent, une URL du document d'état permanent, et une période de validité du document d'état permanent,
extraire (S4) tous les documents permanents de présence pointés dans le document de configuration (CD), au moyen des noms et des URL associés aux documents d'état permanent,
envoyer une demande d'extraction pour au moins un document d'état permanent (PSD) qui est disponible pour la publication selon sa période de validité au serveur de contenu (CS), et récupérer ledit au moins un document d'état permanent (PSD),
appliquer (S5) une composition de présence de l'entité présente souscrite et envoyer un document de présence fusionné contenant des informations provenant dudit au moins un document d'état permanent (PSD) à l'observateur (WA),
dans lequel les échanges entre le serveur de contenu (CS) et le serveur de présence (PS) sont basés sur le protocole d'accès à la configuration XML.

3. Procédé de gestion d'états de présence permanents, le procédé comprenant les étapes suivantes dans un système :
stocker (S1), dans un serveur de contenu (CS), différents documents d'états permanents (PSD) et un document de configuration (CD), les documents d'états permanents ayant des noms différents, le document de configuration définissant pour chaque document d'état permanent le nom du document d'état permanent, une URL du document d'état permanent, et une période de validité du document d'état permanent, et le document de configuration étant stocké en correspondance avec un identifiant (IdP) d'une entité présente,
recevoir (S2), dans un serveur de présence (PS), une demande d'abonnement provenant d'un observateur, la demande contenant l'identifiant (IdP) d'une entité présente,
envoyer (S3) une demande d'extraction pour le document de configuration (CD) de l'entité présente à partir du serveur de présence (PS) au serveur de contenu (CS), la demande d'extraction contenant l'identifiant (IdP) de l'entité présente, et récupérer dans le serveur de présence le document de configuration (CD),
extraire (S4), dans le serveur de présence (PS), tous les documents permanents de présence pointés dans le document de configuration (CD), au moyen des noms et des URL associés aux documents d'état permanent,
envoyer, dans le serveur de présence (PS), une demande d'extraction pour au moins un document d'état permanent (PSD) qui est disponible pour la publication selon sa période de validité au serveur de contenu (CS), et récupérer le document d'état permanent (PSD),
appliquer (S5), dans le serveur de présence (PS), une composition de présence de l'entité présente souscrite et envoyer un document de présence fusionné contenant des informations provenant du document d'état permanent (PSD) à l'observateur,
dans lequel les échanges entre le serveur de contenu (CS) et le serveur de présence (PS) sont basés sur le protocole d'accès à la configuration XML.

4. Procédé selon la revendication 3, dans lequel les documents d'états permanents (PSD) ont des périodes de validité différentes.

5. Procédé selon la revendication 3 ou 4, dans lequel les périodes de validité différentes de documents d'états permanents (PSD) se chevauchent.

6. Procédé selon l'une quelconque des revendications 3 à 5, dans lequel si au moment de la composition de présence, différents documents d'états permanents (PSD) sont récupérés, le document de présence fusionné contient des informations provenant des différents documents d'états permanents (PSD) récupérés.

7. Procédé selon l'une quelconque des revendications 3 à 6, dans lequel le document de présence fusionné contient des informations provenant dudit au moins un document d'état permanent (PSD) en plus d'autres documents de présence courants.

8. Serveur de contenu (CS) de gestion d'états de présence permanents, le serveur de contenu (CS) étant configuré pour :
stocker différents documents d'états permanents (PSD) et un document de configuration (CD), les documents d'états permanents ayant des noms différents, le document de configuration définissant pour chaque document d'état permanent le nom du document d'état permanent, une URL du document d'état permanent, et une période de validité du document d'état permanent, et le document de configuration étant stocké en correspondance avec un identifiant (IdP) d'une entité présente,
recevoir une demande d'extraction pour le document de configuration (CD) en provenance d'un serveur de présence (PS), la demande d'extraction contenant un identifiant (IdP) de l'entité présente, et envoyer le document de configuration (CD) identifié au moyen de l'identifiant (IdP) au serveur de présence (PS),
recevoir, à partir du serveur de présence, une demande d'extraction pour au moins un document d'état permanent (PSD) qui est disponible pour la publication selon sa période de validité, la demande contenant le nom du document d'état permanent, et envoyer ledit au moins un document d'état permanent (PSD) identifié au moyen de son nom au serveur de présence,
dans lequel les échanges entre le serveur de contenu (CS) et le serveur de présence (PS) sont basés sur le protocole d'accès à la configuration XML.

9. Serveur de présence (PS) de gestion d'états de présence permanents, le serveur de présence (PS) étant configuré pour :
recevoir une demande d'abonnement en provenance d'un observateur (WA), la demande contenant l'identifiant (IdP) d'une entité présente,
envoyer une demande d'extraction pour un document de configuration (CD) de l'entité présente au serveur de contenu (CS), la demande d'extraction contenant l'identifiant (IdP) de l'entité présente, et récupérer le document de configuration (CD), le document de configuration définissant pour chacun des différents documents d'états permanents (PSD) le nom du document d'état permanent, une URL du document d'état permanent, et une période de validité du document d'état permanent,
extraire tous les documents permanents de présence pointés dans le document de configuration (CD), au moyen des noms et des URL associés aux documents d'état permanent,
envoyer une demande d'extraction pour au moins un document d'état permanent (PSD) qui est disponible pour la publication selon sa période de validité au serveur de contenu (CS), et récupérer ledit au moins un document d'état permanent (PSD) permanent,
appliquer une composition de présence de l'entité présente souscrite et envoyer un document de présence fusionné contenant des informations provenant dudit au moins un document d'état permanent (PSD) à l'observateur (WA),
dans lequel les échanges entre le serveur de contenu (CS) et le serveur de présence (PS) sont basés sur le protocole d'accès à la configuration XML.

10. Système (PS ; CS) de gestion d'états de présence permanents, le système étant configuré pour :
stocker, dans un serveur de contenu (CS), différents documents d'états permanents (PSD) et un document de configuration (CD), les documents d'états permanents ayant des noms différents, le document de configuration définissant pour chaque document d'état permanent le nom du document d'état permanent, une URL du document d'état permanent, et une période de validité du document d'état permanent, et le document de configuration étant stocké en correspondance avec un identifiant (IdP) d'une entité présente,
recevoir, dans un serveur de présence (PS), une demande d'abonnement provenant d'un observateur, la demande contenant l'identifiant (IdP) d'une entité présente,
envoyer une demande d'extraction pour le document de configuration (CD) de l'entité présente à partir du serveur de présence (PS) au serveur de contenu (CS), la demande d'extraction contenant l'identifiant (IdP) de l'entité présente, et récupérer dans le serveur de présence le document de configuration (CD),
extraire, dans le serveur de présence (PS), tous les documents permanents de présence pointés dans le document de configuration (CD), au moyen des noms et des URL associés aux documents d'état permanent,
envoyer, dans le serveur de présence (PS), une demande d'extraction pour au moins un document d'état permanent (PSD) qui est disponible pour la publication selon sa période de validité au serveur de contenu (CS), et récupérer le document d'état permanent (PSD),
appliquer, dans le serveur de présence (PS), une composition de présence de l'entité présente souscrite et envoyer un document de présence fusionné contenant des informations provenant du document d'état permanent (PSD) à l'observateur,
dans lequel les échanges entre le serveur de contenu (CS) et le serveur de présence (PS) sont basés sur le protocole d'accès à la configuration XML.

11. Support de stockage lisible par ordinateur non transitoire stockant des instructions qui, lorsqu'elles sont exécutées par un serveur de contenu, amènent le serveur à réaliser un procédé de gestion d'états de présence permanents selon toutes les étapes de la revendication 1.

12. Support de stockage lisible par ordinateur non transitoire stockant des instructions qui, lorsqu'elles sont exécutées par un serveur de présence, amènent le serveur à réaliser un procédé de gestion d'états de présence permanents selon toutes les étapes de la revendication 2.

13. Support de stockage lisible par ordinateur non transitoire stockant des instructions qui, lorsqu'elles sont exécutées par un système, amènent le serveur à réaliser un procédé de gestion d'états de présence permanents selon toutes les étapes de la revendication 3.
